# EUROPÄISCHE PATENTSCHRIFT

(11) **EP 0 659 337 B1**
(45) Veröffentlichungstag und Bekanntmachung des Hinweises auf die Patenterteilung: **04.12.1996**
(21) Anmeldenummer: 94890184.8
(22) Anmeldetag: 27.10.1994
(51) Int. Cl.: A01K 5/02

(54) **Fütterungsanlage**
Feeding installation
Installation pour l'alimentation

(30) Priorität: 21.12.1993 AT 2579/93
(43) Veröffentlichungstag der Anmeldung: 28.06.1995
(73) Patentinhaber: Vogl, Gerhard, Dipl.-Ing., A-4070 Eferding (AT)
(72) Erfinder: Vogl, Gerhard, Dipl.-Ing., A-4070 Eferding (AT)
(74) Vertreter: Hübscher, Gerhard, Dipl.-Ing.

(56) Entgegenhaltungen:
- EP-A- 0 163 080
- EP-A- 0 373 147
- EP-A- 0 544 640
- DE-C- 3 637 408

## Beschreibung

Die Erfindung betrifft eine Fütterungsanlage nach dem Oberbegriff des Patentanspruches 1.

Bei derartigen Fütterungsanlagen können Einzeltiere oder Tiergruppen über das zu den Futterstellen geförderte Futter versorgt werden. Dabei kann bei Verwendung von zentralen Steuereinheiten sowohl die Fütterungszeit als auch die Größe jeder Futterportion für die einzelnen Abgabestellen bestimmt werden. Zu diesem Zweck kann man die Öffnungszeiten der Futterauslässe unter Verwendung von Dosierventilen steuern bzw. nach einer anderen Möglichkeit die Gewichtsabnahme des in einem Vorratsbehälter befindlichen Mischfutters während der Öffnungszeit eines bestimmten Auslasses überwachen und den Auslaß nach Abgabe des Sollgewichtes sperren. Durch verschiedene Korrekturverfahren, z.B. Kombinationen aus Zeitsteuerungen für die Ventile und Überwachung der Abgabemengen über Wiegeeinrichtungen des Mischbehälters sowie durch Erfassung des Füllinhaltes des Förderweges und der Restfuttermenge nach einem Fütterungszyklus über mehrere Futterstellen läßt sich im Bedarfsfall eine sehr genaue Einzeldosierung erzielen. Neben Flüssigfutter, das z.B. nach der AT-B 384 147 über eine Pumpe und eine vorzugsweise als Ringleitung ausgebildete Förderleitung zu den Abgabestellen transportiert wird, sind nach der EP-A1 0 373 147 auch Fütterungsanlagen bekannt, bei denen Trockenfutter zu den einzelnen Auslässen entlang des Fdrderweges transportiert und dort in nachgeordneten Mischbehältern mit Wasser zu einem angefeuchteten Futter oder Flilssigfutter aufbereitet wird. Das Wasser wird ilber eine fur alle Auslässe gemeinsame und an den MischbehXltern mit gesteuert freigebbaren Absperrorganen versehene Leitung zugefilhrt. Es ist auch mdglich, ilber die TXa55erzugabe mit Hilfe von Dosierventilen gleichzeitig die Futterauslässe für das Trockenfutter am Förderweg zu öffnen und so die Steuerung zu vereinfachen. Schließlich ist es auch bekannt, bei einer Flüssigfütterungsanlage unter Druck gesetzte Luft zum Zubringen von einzelnen Futterportionen zu vorgewählten Auslässen zu verwenden bzw. nach einer Variante gemäß der EP-A 0 544 640 einen bei einer Pumpenförderung noch in der Leitung befindlichen Futterrest durch Druckluftzufuhr zum Mischbehälter zurückzufördern und dabei bzw. anschließend die Förderleitung und die Auslasse durch Durchblasen mit Druckluft, in die gegebenenfalls Wasser eingesprüht wird, zu reinigen.

Um bei Trockenfütterungsanlagen die Abgabe individuell einstellbarer Futtermischungen an den einzelnen Abgabestellen zu ermöglichen, ist es nach der DE-A 36 37 408 bekannt, zwei Ringförderer vorzusehen, die von gesonderten Mischbehältern aus über Schneckenförderer beschickt werden, wobei an den den Futterstellen zugeordneten Futterauslässen der beiden Ringleitungen Querförderer angeordnet sind, die für sich angetrieben werden können und das Futter zu den Futterstellen fördern. Durch individuelle Regelung der Fördergeschwindigkeit in den Ringförderern lassen sich alle theoretisch möglichen Mischungsverhältnisse aus den beiden Grundmischungen mittels der Querförderer herstellen und an den einzelnen Abgabestellen ausgeben.

Bei der Tierhaltung, z.B. bei der Rinder- und Schweinehaltung, müssen häufig einzelne Tiere oder auch einzelne Tiergruppen zusätzlich zu dem Futter mit Kleinmengen von Futterzusätzen versehen werden. Solche Futterzusätze können Medikamente, Spurenelemente, Vitamine usw. sein. Dabei ist darauf zu achten, daß viele solcher Futterzusätze nur an bestimmte Tiere abgegeben werden sollen bzw. dürfen. In Ställen, in denen sowohl Zucht- als auch Schlachttiere gehalten werden, dürfen beispielsweise bestimmte Medikamente nur an die Zuchttiere verabreicht werden, wogegen die Verabreichung auch von Spuren dieser Medikamente an Schlachttiere unerwünscht bzw. sogar verboten ist.

Die letztgenannte Forderung läßt sich bisher nur dadurch erreichen, daß diese Kleinmengen direkt an den einzelnen Futterstellen ausgegeben werden, wobei aber immer die Gefahr von Dosierfehlern besteht und sich überdies ein beträchtlicher Arbeitsaufwand ergibt. Es muß außerdem genau vorbestimmt werden, an welcher Futterstelle jede einzelne Kleinmenge ausgegeben wird.

Nach der AT-B 384 147 wird vorgesehen, die Futterzusätze zu einem solchen Zeitpunkt in die Förderleitung einzuspritzen, daß die Zusätze mit der weiter transportierten Futtersäule jeweils an dafür vorbestimmten Auslässen abgegeben werden. In ähnlicher Weise werden nach der EP-A 0 373 147 dem in einer Wasserleitung geführten Wasser Futterzusätze beigemischt. In beiden Fällen läßt sich aber nicht verhindern, daß zumindest Kleinmengen oder Spuren der Futterzusätze durch Rückstandsbildungen in der Leitung oder auch durch nicht ganz exakte Bestimmung des richtigen Zeitpunktes für das Einspritzen in die Leitung sowie schließlich auch infolge unterschiedlicher Strömungsverhältnisse in der Futter- bzw. Wasserleitung und durch Diffusion in das an anderen Abgabestellen abzugebende Futter gelangen, was, wie schon erwähnt wurde, bei vielen Zusätzen unerwünscht bzw. sogar verboten ist.

Es ist zwar aus der US-A 4 733 971 eine Einrichtung bekannt, die es ermöglicht, Futterzusätze aus verschiedensten Zutaten in ganz exakt vorherbestimmbaren Mengen und Einzeldosierungen herzustellen, doch wird auch bei dieser Einrichtung die Zusatzmischung direkt in einen Futterstrom geleitet, so daß die Möglichkeit einer Abgabe an für den Empfang nicht berechtigte bzw. bestimmte Tiere zumindest in Restmengen besteht.

Auch bei einer Einrichtung nach der US-A 4 463 706 besteht die Gefahr, daß Reste eines Futterzusatzes von dafür nicht berechtigten oder bestimmten Tieren aufgenommen werden. Nach dieser Konstruktion sind für in der Gruppe oder auf der Weide gehaltene Tiere Selbsttränken vorhanden, denen Vorratsbehälter für Medikamente oder sonstige Futterzusätze zugeordnet sind. Jedes Tier trägt eine Identifizierungsmarke und an jeder Selbsttränke ist eine Identifizierungseinrichtung vorhanden, die mit einer zentralen Steuereinheit verbunden sein kann. Wird ein Tier als berechtigt identifiziert, so wird ein Dosierventil am Vorratsbehälter angesteuert, das eine vorbestimmte Menge des Zusatzes in das Tränkbecken abgibt, so daß dieser Zusatz vom Tier aufgenommen werden kann. Wird das Tier verdrängt oder frißt es das Becken nicht ganz leer, so können nicht berechtigte Tiere den Rest des Futterzusatzes aufnehmen.

Aufgabe der Erfindung ist es demnach, eine Fütterungsanlage gemäß dem Oberbegriff des Patentanspruches 1 zu schaffen, bei der eine einfache und genaue Zufuhr von Futterzusätzen zu einzelnen, ausgewählten Futterstellen möglich ist, wobei eine Kontaminierung des anderen Futterstellen zugeführten Futters mit diesen Futterzusätzen sicher verhindert werden kann.

Die gestellte Aufgabe wird erfindungsgemäß durch die Merkmale des Patentanspruches 1 gelöst.

Die Abgabe der Kleinmengen der Futterzusätze kann in ähnlicher Weise erfolgen, wie bisher insbesondere bei höher organisierten Fütterungsanlagen die Futterzuteilung an die einzelnen Futterstellen vor sich geht. Dabei kann eine Ausführung gemäß Anspruch 2 Verwendung finden.

Vorzugsweise werden Zubringerleitungen mit im Vergleich zu einer Förderleitung für das Futter kleinen Querschnitten verwendet. Da das Eintragen der Zusätze zwischen Futterauslaß und Futterstelle erfolgt, ist eine Kontaminierung des im Förderweg befindlichen Futters mit den Futterzusätzen ausgeschlossen. Wegen der Reinigungsmöglichkeit der Zubringerleitung, die auch eine Reinigungsmöglichkeit für die Dosierventile od.dgl. umfaßt, wird es möglich, trotz der Verwendung einer einzigen Zubringerleitung verschiedenste Futterzusätze an dafür auswählbaren Abgabestellen abzugeben, ohne daß eine Kontaminierungsmöglichkeit durch die vorher verteilten Futterzusätze besteht.

Eine bevorzugte Ausführungsform, die die individuelle Zufuhr verschiedener Futterzusätze zu verschiedenen Abgabestellen unter Verwendung einer gemeinsamen Leitung ermöglicht, ist in Anspruch 3 angegeben.

Dabei kann man sowohl flüssige als auch feste, insbesondere staub- oder pulverförmige Futterzusätze in vorbestimmten Mengen zu den ausgewählten Abgabestellen trans- portieren und dort in das Futter einbringen. Die zum Transport erforderliche, unter Überdruck stehende Luft kann aus einem Windkessel, einer Druckluftleitung od.dgl. entnommen oder auch über einen Kompressor oder ein Gebläse, der bzw. das bei einer Abgabe eingeschaltet wird, unmittelbar erzeugt werden. Um zu gewährleisten, daß, gleichgültig ob Druckluft oder Wasser als Transportmedium verwendet wird, das Material nicht über die ausgewählte Abgabestelle hinaus in der Zubringerleitung befördert wird, kann man in der Zubringerleitung bei jeder Abgabestelle ein Ventil vorsehen, das die Zubringerleitung mit der Abgabestelle verbindet bzw. in der anderen Stellung, bei der Beschickung weiterer Abgabestellen das Durchströmen des Transportmediums zuläßt.

Eine Variante zur Lösung der gleichen Aufgabe, die ohne individuelle Absperrorgane in der Zubringerleitung auskommt, ist in Anspruch 4 angegeben.Hier ist nur ein Absperrorgan in dem von der Hauptleitung abzweigenden Auslaß jeder einzelnen Abgabestelle notwendig. Futterzusätze, die in der Leitung über den freigegebenen Auslaß hinausgelangt sind, werden bei der Beaufschlagung der Leitung von der anderen Seite her über den Auslaß wieder an die gewünschte Abgabestelle geleitet. Durch Wiederholung dieses Vorganges und auch durch gemeinsame Beaufschlagung der Leitung von beiden Enden her wird es möglich, die Leitung völlig zu säubern, so daß an einer anderen Abgabestelle ein Futterzusatz anderer Konsistenz bzw. Zusammensetzung abgegeben werden kann.

Weitere Einzelheiten und Vorteile des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: schematisiert einen Teil einer erfindungsgemäßen Fütterungsanlage in einer ersten Ausführungsform und
- Fig. 2: eine Ausführungsvariante, bei der unter Druck gesetzte Luft als Transportmedium Verwendung finden kann.

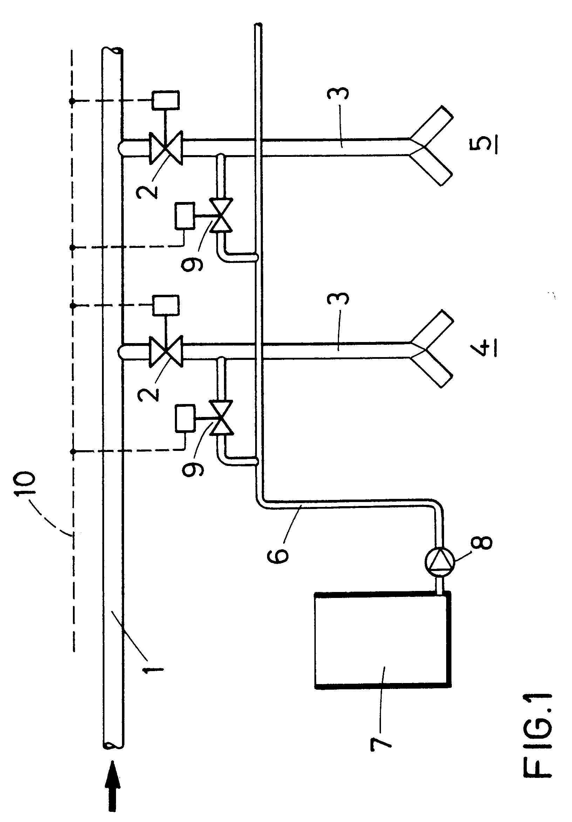

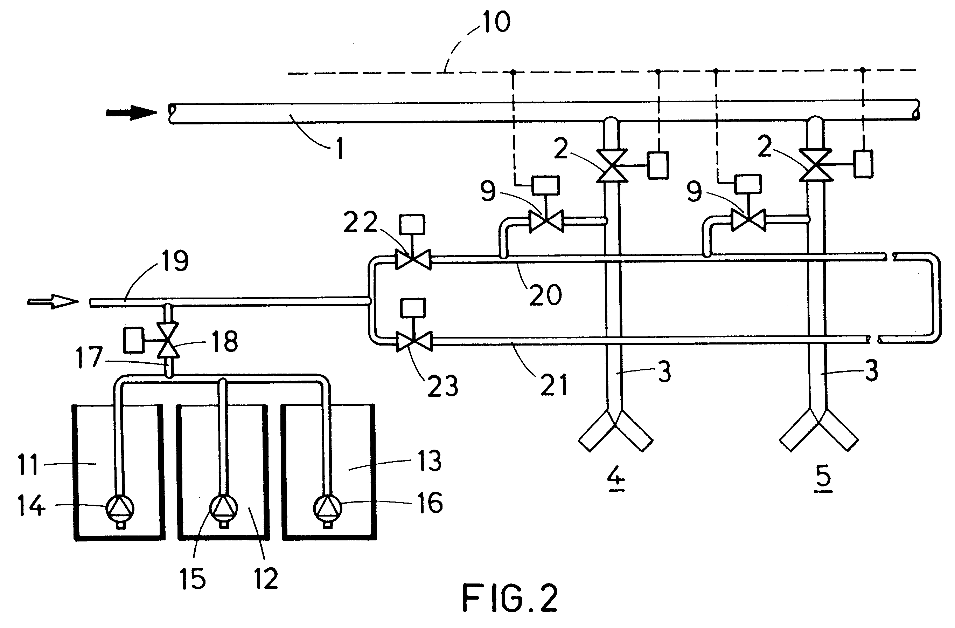

Nach den Fig. 1 und 2 besitzt eine für die Abgabe von Flüssigfutter bestimmte Fütterungsanlage eine z.B. als Ringleitung ausgebildete Förderleitung 1, die von einem Vorratsmischbehälter mit Flüssigfutter beschickt wird, wobei auch die Möglichkeit besteht, einzelne Futterportionen über eine Pumpe in die Leitung 1 einzubringen und dann durch Einblasen von unter Überdruck stehender Luft zu den Auslässen zu befördern. An die Leitung 1 schließen über Ventile 2 Ablaufleitungen 3 an, die zu Futterstellen führen und dort das Futter z.B. in einen Trog abgeben. Die einzelnen Futterstellen wurden mit 4 und 5 bezeichnet. Zur Steuerung der Ventile 2 kann eine zentrale Steuereinheit vorgesehen sein, die auch die Fördereinrichtungen für das Futter steuert.

Zusätzlich zu dieser an sich bekannten Fütterungsanlage ist nach Fig. 1 eine Zubringerleitung 6 vorgesehen, die bei der Ausführungsform nach Fig. 1 von einem Vorratsbehälter 7 über einen Förderer 8 mit Futterzusätzen beschickt werden kann. Ausgewählten Ausgabestellen, also den Ausgabestellen 4, 5 nach dem Ausführungsbeispiel, sind Dosierventile 9 zugeordnet, die von einer zentralen Steuerleitung 10 aus gesteuert werden und abhängig von dieser Steuerung vorbestimmte Mengen des gegebenenfalls mit Flüssigkeit aufgeschwemmten Futterzusatzes aus dem Vorratsbehälter 7 nach dem Dosierventil 2 in die Leitung 3 einspritzen oder einsprühen. Vorzugsweise erfolgt dieses Einsprühen gemeinsam mit der Futterabgabe an der jeweiligen Futterstelle 4 bzw. 5 über das Dosierventil 2.

Bei der Ausführungsform nach Fig. 2 sind mehrere Vorratsbehälter 11, 12, 13 für verschiedene Futterzusätze bzw. eine Spülflüssigkeit oder Wasser vorgesehen, wobei aus jedem dieser Vorratsbehälter über eine Pumpe 14, 15, 16 eine Leitung 17 beschickt werden kann, in der ein wieder über die Steuerleitung 10 gesteuertes Ventil 18 angeordnet ist. Nach dem Ventil 18 mündet die Leitung 17 in einer mit unter Druck stehender Luft z.B. von einem Turbokompressor aus beaufschlagten Zubringerleitung 19, die sich im Bereich der auszuwählenden Abgabestellen 4, 5 in zwei Leitungszweige 20, 21 einer Ringleitung gabelt und hinter den auszuwählenden Abgabestellen 4, 5 zum Ring geschlossen ist. In jedem dieser Leitungszweige 20, 21 liegt wieder ein steuerbares Ventil 22, 23.

Für die Abgabe von Futterzusätzen an einer ausgewählten Futterstelle 4 oder 5 werden die Pumpen 14 bzw. 15 ebenfalls von der zentralen Steuereinrichtung aus für bestimmte, die Abgabemenge bestimmenden Zeitspannen eingeschaltet, wobei diese Abgabemenge auch durch Wiegeeinrichtungen an den Behältern 11 - 13 bestimmt werden kann. Das Ventil 18 wird geöffnet und in die Leitung 19 wird unter Druck stehende Luft eingeblasen. Soll die Abgabe des Futterzusatzes beispielsweise an der Futterstelle 4 erfolgen, dann wird zunächst das Ventil 22 und das Ventil 9 an der Abgabestelle 4 geöffnet, so daß der Futterzusatz in die Leitung 3 eingeblasen wird und sich dort mit dem Futter, das über 2 zugeführt wurde, vermischt und an der Abgabestelle 4 abgegeben wird. Nach Abgabe der Teilmengen wird das Ventil 18 geschlossen und die Pumpen 14, 15 werden ausgeschaltet. Nun wird auch das Ventil 22 geschlossen und das Ventil 23 geöffnet, so daß Futterzusätze, die über den zur Abgabestelle 4 führenden Abzweig aus der Leitung 20 hinausbefördert wurden, zurückgeblasen werden und über das noch geöffnete Ventil 9 in die Leitung 3 gelangen. Man kann auch beide Ventile 22, 23 während der Abgabe öffnen und dabei die Luftzufuhr über 23 etwas drosseln, so daß durch den Rückstau in den rechts vom Abzweig liegenden Leitungsteil 20 ein Eindringen des Zusatzes in diesen hinter dem Abzweig liegenden Leitungsteil verhindert wird. Nach Abgabe der Futterzusätze kann man das Ventil 18 wieder öffnen und die Leitungen durch mit der Pumpe 16 aus dem Behälter 13 entnommenem Wasser, das durch über 19 zugeführte Druckluft zu einem Nebel versprüht wird, reinigen. Es ist somit möglich, jeder Futterstelle 4 bzw. 5, die über Anschlüsse an die Leitung 20 verfügt, individuell vorbestimmte Mengen beliebiger vorrätiger Futterzusätze zuzuführen. Vorzugsweise wird die Dosierung und die Abgabe bzw. die Auswahl der Abgabestellen von einem zentralen Computer aus gesteuert.

## Patentansprüche

1. Fütterungsanlage zur Abgabe von Futter, insbesondere Flüssigfutter oder angefeuchtetem Futter an mehrere Futterstellen (4, 5), mit wenigstens einem mit dem Futter beschickbaren Förderweg (1), entlang dem gesteuert freigebbare Futterauslässe (2) zur Abgabe von Futterportionen an die Futterstellen (4, 5) angeordnet sind, wobei Einrichtungen (6 - 23) zur Zugabe von Kleinmengen von Futterzusätzen, z.B. von Medikamenten, Spurenelementen oder Vitaminen zu dem an auswählbaren Futterstellen (4, 5) abzugebenden Futter vorgesehen sind dadurch gekennzeichnet, daß die Einrichtungen (6 - 23) zur Zugabe der Futterzusätze wenigstens eine gesonderte, aber für die auswählbaren Futterstellen (4, 5) gemeinsame und ausschließlich für die Förderung der Futterzusätze bestimmte Zubringerleitung (6, 19 - 21) aufweisen, die von wenigstens einem Vorratsbehälter (7, 11, 12) mit den Zusätzen beschickbar ist und die an den auswählbaren Futterstellen (4, 5) mit gesteuert freigebbaren Auslässen (9) für die individuelle Einbringung der Kleinmengen der Futterzusätze zwischen dem Futterauslaß (2) des Förderweges (1) und der jeweils ausgewählten Futterstelle (4, 5) versehen ist und daß zur Verhinderung der Abgabe von Futterzusatzresten an für diesen Zusatz nicht vorgesehene Abgabestellen für die Zubringerleitung Reinigungseinrichtungen, nämlich Einrichtungen zum Spülen mit Flüssigkeit, Druckluft oder Druckluft, in die eine Flüssigkeit einsprühbar ist, vorgesehen sind.

2. Fütterungsanlage nach Anspruch 1, dadurch gekennzeichnet, daß die Auslässe (9) der Zubringerleitung (6) mit von einer Zentrale aus gesteuerten Dosierventilen versehen sind.

3. Fütterungsanlage nach Anspruch 1, dadurch gekennzeichnet, daS die Zubringerleitung (19, 20, 21) mit einem unter Überdruck stehenden neutralen Transportmedium, insbesodere Luft oder Wasser beschickbar ist und in die Zubringerleitung von einem oder mehreren Vorratsbehältern (11 - 13) aus über Dosiereinrichtungen (14, 15, 16, 18) gesondert den einzelnen Abgabestellen (4, 5) zugeordnete Kleinmengen der Futterzusätze eintragbar sind.

4. Fütterungsanlage nach Anspruch 3, dadurch gekennzeichnet, daß bei Verwendung von Druckluft als Transportmedium die Zubringerleitung (20, 21) über Absperrorgane (22, 23) wahlweise von dem einen oder anderen bzw. von beiden Enden her mit Druckluft beaufschlagbar ist.

## Claims

1. A feeding installation for delivering fodder, more particularly liquid or moist fodder, to a number of feeding stations (4, 5), comprising at least one conveying path (1) for loading with fodder and along which controlled-release fodder outlets (2) for delivering portions of fodder to the feeding stations (4, 5) are disposed, means (6 - 23) being provided for supplying small quantities of fodder additives, such as drugs, trace elements or vitamins, to the fodder for delivery at selectable feeding stations (4, 5), characterised in that the means (6 - 23) for supplying fodder additives comprise at least one supply pipe (6, 19 - 21) which is separate but common to the selectable feeding stations (4, 5) and exclusively intended for supplying the fodder additives and is adapted to be loaded with additives from at least one storage container (7, 11, 12) and is provided at the selectable feeding stations (4, 5) with controlled-release outlets (9) for individually introducing the small quantities of fodder additives between the outlet (2) of the conveying path (1) and the selected feeding station (4, 5), and in that the supply pipe is provided with cleaning means, i.e. means for rinsing or scavenging with liquid, compressed air or compressed air into which a liquid can be sprayed, for preventing delivery of residues of fodder additives to delivery stations not intended for such additives.

2. A feeding installation according to claim 1, characterised in that the outlets (9) of the supply pipe (6) are provided with metering valves controlled by a central unit.

3. A feeding installation according to claim 1, characterised in that the supply pipe (19, 20, 21) can be supplied with a neutral conveying medium, more particularly air or water, under excess pressure, and small quantities of fodder additives can be introduced into the supply pipe from one or more storage containers (11 - 13) through metering means (14, 15, 16, 18) separately to the individual delivery stations (4, 5).

4. A feeding installation according to claim 3, characterised in that when compressed air is used as the conveying medium, the supply pipe (20, 21) can be supplied with compressed air optionally from one or the other or from both ends, via shut-off means (22, 23).

## Revendications

1. Unité fourragère, destinée à fournir une alimentation animale, en particulier une alimentation animale liquide ou une alimentation animale humidifiée, en plusieurs points d'alimentation (4, 5), comportant au moins un chemin de transport (1) pouvant être garni du produit d'alimentation, et le long desquels des évacuations d'alimentation animale (2) pouvant être libérées sous une commande sont disposées pour fournir des portions d'alimentation aux points d'alimentation (4, 5), des dispositifs (6 à 23), destinés à adjoindre de petites quantités d'additifs alimentaires, par exemple des médicaments, des éléments-traces ou oligo-éléments ou des vitamines à l'alimentation à fournir aux points d'alimentation (4, 5) étant prévus, caractérisée en ce que les dispositifs (6 à 23), destinés à l'adjonction des additifs alimentaires, présentent au moins une conduite d'alimentation (6, 19 à 21) séparée, mais commune pour les points d'alimentation (4, 5) pouvant être sélectionnés et conçue exclusivement pour le transport des additifs alimentaires, conduite pouvant être alimentée avec les additifs, depuis au moins un récipient de stockage (7, 11, 12), et qui est pourvue, aux points d'alimentation (4, 5) pouvant être sélectionnés, de sorties d'évacuation (9) pouvant être libérées sous une commande, pour introduire de façon individuelle les petites quantités des additifs alimentaires entre la sortie du produire alimentaire (2) du chemin de transport (1) et le point d'alimentation (4, 5) chaque fois sélectionné, en ce que, pour empêcher l'envoi de restes d'additifs alimentaires aux points de fourniture non prévus pour cette addition, sont prévus pour la conduite d'alimentation des dispositifs de nettoyage, précisément des dispositifs destinés à effectuer un rinçage avec un liquide, de l'air comprimé ou de l'eau sous pression, dans lequel ou laquelle un liquide peut être pulvérisé. .

2. Unité fourragère selon la revendication 1, caractérisée en ce que les sorties d'évacuation (9) de la conduite d'alimentation (6) sont pourvues de soupapes de dosage commandées depuis une centrale.

3. Unité fourragère selon la revendication 1, caractérisée en ce que la conduite d'alimentation (19, 20, 21) peut être alimentée avec un milieu de transport neutre classé en surpression, en particulier de l'air ou de l'eau, et dans la conduite d'alimentation peuvent être introduites de petites quantités, associées séparément aux différents points de fourniture (4, 5), des additifs alimentaires pour animaux, depuis un ou plusieurs récipients de stockage (11, 13) par l'intermédiaire de dispositifs de dosage (14, 15, 16, 18).

4. Unité fourragère selon la revendication 3, caractérisée en ce que, en cas d'utilisation d'air comprimé comme milieu de transport, la conduite d'alimentation (20, 21) peut être alimentée en air comprimé à volonté par l'intermédiaire d'organes d'isolement (22, 23) par l'une ou l'autre, respectivement par les deux extrémités.
